# FASCICULE DE BREVET EUROPEEN

(11) **EP 2 038 318 B1**
(45) Date de publication et mention de la délivrance du brevet: **15.08.2018**
(21) Numéro de dépôt: 07765671.8
(22) Date de dépôt: 27.06.2007
(51) Int. Cl.: C08F 293/00, C08F 226/04, C08F 220/56, C08F 2/38

(54) **POLYMERISATION A PARTIR D'UNE AMINE DI-ALLYLIQUE ET COMPOSE COMPRENANT UNE CHAINE MACROMOLECULAIRE COMPRENANT DES UNITES DERIVANT DE CETTE AMINE**
POLYMERISATION EINES DIALLYLAMINS UND EINER VERBINDUNG MIT EINER MAKROMOLEKULAREN KETTE, DIE AUS VON EINEM DERARTIGEN AMIN ABGELEITETEN EINHEITEN BESTEHT
POLYMERISATION FROM A DIALLYLAMINE AND A COMPOUND CONTAINING A MACROMOLECULAR CHAIN CONSISTING OF UNITS DERIVED FROM SUCH AN AMINE

(30) Priorité: 30.06.2006 FR 0605926
(43) Date de publication de la demande: 25.03.2009
(73) Titulaire: Rhodia Opérations, 93306 Aubervilliers (FR)
(72) Inventeur: DESTARAC, Mathias, F-75005 Paris (FR)
(74) Mandataire: Lavoix
(86) Numéro de dépôt international: PCT/EP2007/056419
(87) Numéro de publication internationale: WO 2008/000766

(56) Documents cités:
- US-B1- 6 355 718

## Description

La présente invention a pour objet un procédé de préparation d'un composé comprenant des chaînes macromoléculaires, mettant en oeuvre une amine di-allylique. La présente invention concerne également un composé comprenant des chaînes macromoléculaires à architecture contrôlée, comprenant des unités dérivant d'une amine di-allylique.

Les dix dernières années ont vu se développer de nombreuses techniques de polymérisation radicalaire contrôlée, pouvant donner accès de manière relativement simple et peu onéreuse, à partir de monomères, à de nombreuses variétés de composés macromoléculaires. On peut citer par exemple les techniques dites d'ATRP, les techniques mettant en oeuvre des nitroxydes ou des alcoxyamines pouvant générer des nitroxydes. Ces techniques de polymérisation ont permis de concevoir de nombreux nouveaux composés macromoléculaires, notamment des composés macromoléculaires à architecture contrôlée tels que des polymères à blocs, et de moduler de nombreuses propriétés de tels composés. De nombreuses publications ont fait état de techniques de polymérisation radicalaire contrôlée, de leurs applications sur certains monomères, de composés macromoléculaires pouvant être obtenus par ces techniques, et de leurs propriétés ou utilisations.

Toutefois pour certains monomères, il n'a jamais été décrit de techniques de polymérisation de type radicalaire contrôlée adaptées, et il n'a jamais été décrit de composés macromoléculaires à architecture contrôlée dérivant de ces monomères. Pour la conception et la modulation de propriétés de composés macromoléculaires, et pour la fabrication de ceux-ci, il existe des limites. Il existe un besoin pour les techniques de polymérisation et pour des polymères hors de ces limites. Notamment, il existe un besoin pour des composés macromoléculaires à architecture contrôlée portant des groupes cationiques ou potentiellement cationiques qui présentent une grande stabilité dans de nombreux environnements, des propriétés modulées, un faible prix de revient et/ou un accès simple notamment de par les monomères utilisés.
US-6355718 décrit un procédé de polymérisation d'un diallylique tertiaire utilisant un composé thiocarbonylthio comme agent de transfert.

L'invention répond à au moins certains des besoins mentionnés plus haut en proposant un procédé de préparation d'un composé comprenant des chaînes macromoléculaires, comprenant une "étape P" de polymérisation radicalaire où on met en présence :
- au moins un "monomère M" choisi parmi les amines di-allyliques quaternaires, le cas échéant sous forme d'un sel,
- éventuellement d'autres monomères éthylèniquement insaturés,
- au moins un composé comprenant un groupe de transfert comprenant un groupe de formule -S-CS-, et
- d'un composé portant ou générant des radicaux libres.

L'invention propose également pour répondre à au moins certains des besoins mentionnés plus haut un composé comprenant des chaînes macromoléculaires à architecture contrôlée, caractérisé en ce que :
- les chaînes macromoléculaires comprennent au moins 10% en nombre, de préférence au moins 50%, de préférence au moins 90% d'unités dérivant de monomères éthylèniquement insaturés,
- les chaînes macromoléculaires comprennent des unités dérivant d'au moins un "monomère M" choisi parmi les amines di-allyliques quaternaires, le cas échéant sous forme d'un sel.

On mentionne que le composé de l'invention est susceptible d'être obtenu à l'aide du procédé de l'invention. On mentionne également qu'une architecture contrôlée de chaînes macromoléculaires comprenant des unités dérivant de monomères éthylèniquement insaturés est généralement liée à un procédé de polymérisation contrôlée ou "vivante", de préférence un procédé de polymérisation radicalaire contrôlée. Les procédés de polymérisation radicalaire contrôlée mettant en oeuvre des groupes de transfert de formule -S-CS- permettent l'accès à de tels composés. De tels composés peuvent être préparés de manière simple et/ou économique à l'aide de tels procédés.

### Définitions

Dans la présente demande, on désigne par unité dérivant d'un monomère, autre qu'un monomère M, une unité qui peut être obtenue directement à partir dudit monomère par polymérisation. Ainsi, par exemple, une unité dérivant d'un ester d'acide acrylique ou méthacrylique ne couvre pas une unité de formule -CH₂-CH(COOH)-, ou -CH₂-C(CH₃)(COOH)-, obtenue par exemple en polymérisant un ester d'acide acrylique ou méthacrylique, puis en hydrolysant. Par exemple également une unité dérivant d'acide acrylique ou méthacrylique désigne une unité de formule -CH₂-CH(COOH)- ou -CH₂-C(CH₃)(COOH)- même si ces unités ont été obtenues en polymérisant un ester d'acide acrylique ou méthacrylique, puis en hydrolysant.

Dans la présente demande, on désigne par unité dérivant d'un monomère M une unité qui peut être obtenue directement à partir dudit monomère, avec un éventuel réarrangement tel qu'une cyclisation sous forme d'un hétérocycle comprenant un atome d'azote, et, le cas échéant, avec une éventuelle modification chimique (par chloroalkylation par exemple pour quaterniser une amine secondaire).

Dans la présente demande on désigne par monomère différent du monomère M, un monomère qui n'est pas une amine di-allylique quaternaire le cas échéant sous forme d'un sel, notamment comme décrit ci-dessous. On désigne aussi des monomères et les unités qui en dérivent comme des autres monomères ou autres unités.

Dans la présente demande une "composition de monomères" mise en oeuvre lors d'une étape de polymérisation, est définie par la nature et la quantité relative de monomères. Il peut s'agir d'un unique monomère. Il peut s'agir d'une association de plusieurs monomères (comonomères), de natures différentes, dans des proportions données. De même, une composition d'une chaîne macromoléculaire ou une composition d'unités d'une chaîne macromoléculaire, est définie par la nature et la quantité relative des monomères dont dérivent les unités de la chaîne macromoléculaire. Il peut s'agir d'une chaîne macromoléculaire dérivant d'un unique monomère (chaîne homopolymérique). Il peut s'agir d'une chaîne macromoléculaire dont les unités dérivent de plusieurs monomères de natures différentes, dans des proportions données (chaîne copolymérique).

Dans la présente demande une composition différente de monomères désigne une composition dont la nature du ou des monomères et/ou dont leurs proportions en différents monomères sont différentes. Il en est de même par analogie pour une chaîne macromoléculaire différente ou une composition d'unités différente. Une composition de monomères comprenant 100% d'un monomère M¹ est différente d'une composition comprenant 100% d'un monomère M². Une composition de monomères comprenant 50% d'un monomère M¹ et 50% d'un monomère A¹ est différente d'une composition comprenant 10% du monomère M¹ et 90% du monomère A¹. Une composition de monomères comprenant 50% d'un monomère M¹ et 50% d'un monomère A¹ est différente d'une composition comprenant 50% du monomère M¹ et 50% d'un monomère A².

Dans la présente demande, pour simplifier, on assimile parfois les unités dérivant d'un monomère au monomère lui-même, et réciproquement.

Dans la présente demande, un monomère éthylèniquement insaturé, est un composé comprenant une double liaison carbone-carbone, polymérisable. Il peut s'agir d'un monomère mono-éthylèniquement insaturé, de préférence alpha-mono-éthylèniquement insaturé, ou d'un monomère multi-éthylèniquement insaturé. Dans la présente demande, pour les composés différents des copolymères étoiles ou microgels étoiles, et pour des procédés différents de procédé de préparations de copolymères étoiles ou microgels étoiles, un monomère éthylèniquement insaturé désigne un monomère mono-éthylèniquement insaturé, de préférence alpha-mono-éthylèniquement insaturé.

### Monomère M et unités dérivant du monomère M

Le monomère M est une amine di-allylique quaternaire éventuellement sous forme d'un sel. Il peut s'agir d'un mélange ou d'une association de plusieurs de ces aminés. On mentionne que le monomère et les unités dérivant du monomère M peuvent se trouver sous différentes formes, notamment en fonction du pH du milieu dans lequel ils se trouvent (protonation en acidifiant). Ils peuvent se trouver sous forme de sels, soit de manière permanente à tout pH (aminés quaternaires), soit en fonction du pH. Certains monomères M de type amines quaternaires, et les unités en dérivant, portant un substituant (de type R³ en particulier) comprenant une charge négative sont parfois désignés comme bétaïniques, et ne sont généralement pas considérés comme sous forme de sels. Les monomères M sous forme de sels, et les unités en dérivant, comprennent généralement un contre-anion X⁻.

Des monomères M sont par exemple des monomères de formules suivantes:

CH₂ = CH-CH₂-N⁺R¹R²-CH₂-CH = CH₂, X⁻ (II)

CH₂ = CH-CH₂-N⁺R¹R³CH₂-CH = CH₂ (III)

dans lesquelles,
- R¹ est un groupe hydrocarboné linéaire ou ramifié, saturé ou insaturé, le cas échéant aromatique, le cas échéant substitué, de préférence en C₁-C₃₀. R¹ est de préférence un groupe méthyle ou éthyle.
- R² est un atome d'hydrogène ou un groupe de formule R¹ identique ou différent, formant le cas échéant avec le groupe R¹ un cycle éventuellement hétérocyclique, éventuellement aromatique. R² est de préférence un groupe méthyle ou éthyle.
- X⁻ est un anion, par exemple de préférence un anion Cl⁻, Br⁻, métylsulfate ou éthylsulfate.
- R³ est un groupe hydrocarboné linéaire ou ramifié, saturé ou insaturé, le cas échéant aromatique, le cas échéant substitué, comprenant au moins un groupe portant une charge négative, de préférence en C₁-C₃₀, formant le cas échéant avec le groupe R¹ un cycle éventuellement hétérocyclique, éventuellement aromatique. R³ peut notamment être un groupe carboxyalkyl, sulfoalkyle ou phosphonoalkyl ou l'alkyle comprend de 1 à 3 atomes de carbone.

A titre d'exemples de monomères M on cite:
- le monomère M est le chlorure de diallyldiméthylammonium (DADMAC). Ce monomère est un monomère de formule (II) où R¹ = R² = CH₃ et X⁻ = Cl⁻
- le monomère de formule:

   CH₂ = CH-CH₂-N⁺(CH₃)(CH₂-CH₂-CH₂-SO₃⁻)-CH₂-CH = CH₂

   ce monomère est un monomère de formule (III) où R¹ = CH₃ et R³ = (CH₂)₃-SO₃⁻
- le monomère de formule

   CH₂ = CH-CH₂-N⁺(CH₃)(CH₂-CH₂-CH₂-COO⁻)-CH₂-CH = CH₂

   ce monomère est un monomère de formule (III) où R¹ = CH₃ et R³ = (CH₂)₃-COO⁻

Des unités dérivant des monomères M peuvent notamment être sous forme cyclisée, sous forme d'un hétérocycle comprenant un atome d'azote. Cette cyclisation peut être due à un réarrangement survenant lors de l'étape P de polymérisation. Avantageusement au moins 50% en nombre, de préférence au moins 90%, voire même la totalité, des unités dérivant du monomère M sont sous forme d'un hétérocycle comprenant l'atome d'azote. Cette forme peut notamment contribuer à une bonne stabilité chimique des composés comprenant la chaîne macromoléculaire, notamment en milieux hostiles en terme par exemple de pH, de température, et/ou de présence de molécules susceptible de dégrader des unités polymérisées, en particulier des unités cationiques.

La cyclisation et les hétérocycles peuvent notamment être mis en évidence par analyse RMN (disparition des 2 protons allyliques, déplacement caractéristique des protons portés par les carbones jouxtant l'hétéroatome, et éventuellement déplacement caractéristique de ces carbones).

Les unités dérivant de monomères M sous forme d'un hétérocycle comprenant un atome d'azote, peuvent notamment avoir les formules suivantes, où R¹ , R² , R³ , et X⁻ sont tels que définis ci-dessus:

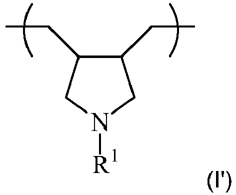

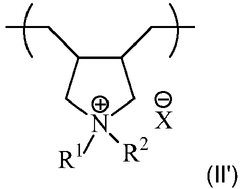

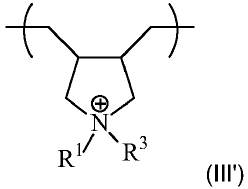

### Autres monomères - Autres unités

Le procédé selon l'invention peut mettre en oeuvre des monomères différents du monomère M. Le composé macromoléculaire selon l'invention peut comprendre des unités différentes des unités dérivant un monomère M.

Ces monomères peuvent notamment être polymérisés en même temps, lors d'une même étape, que le monomère M (copolymérisation). Ils peuvent également ou alternativement être polymérisés lors d'autres étapes de polymérisation, par exemple pour obtenir des composés d'architecture contrôlée comprenant plusieurs parties, par exemple des copolymères à blocs.

Les autres monomères et les unités qui en dérivent peuvent notamment être:
- des monomères ou unités hydrophiles ou hydrophobes,
- des monomères ou unités anioniques, potentiellement anioniques, cationiques, potentiellement cationiques, zwitterioniques, ou neutres, et/ou
- des monomères ou unités de températures de transition vitreuse variées, par exemple inférieure à -100°, comprise entre -100° et -55°, comprise entre -55° et 0°, comprise entre 0° et +55°, comprise entre +55° et +100°, ou supérieure à +100°.

On peut moduler les propriétés et les utilisations des composés selon l'invention à l'aide de ces autres monomères ou autres unités, notamment utilisant les monomères, leurs proportions et leur place dans l'architecture du composé, selon les critères ci-dessus. Les monomères sont souvent classés selon ces critères, et des valeurs relatives à ces critères pour les différents monomères sont le plus souvent tabulées et disponibles dans la littérature.

A titre d'exemples de monomères potentiellement cationiques dont peuvent dériver des unités potentiellement cationiques on peut mentionner:
- les N,N(dialkylaminou)alkyl)amides d'acides carboxyliques α-β monoéthylèniquement insaturés comme le N,N-diméthylaminométhyl -acrylamide ou -méthacrylamide, le 2(N,N-diméthylamino)éthyl-acrylamide ou - méthacrylamide, le 3(N,N-diméthylamino)propyl-acrylamide ou -méthacrylamide, le 4(N,N-diméthylamino)butyl-acrylamide ou -méthacrylamide
- les aminoesters α-β monoéthylèniquement insaturés comme le 2(diméthyl amino)éthyl acrylate (ADAM), 2(diméthyl amino)éthyl méthacrylate (DMAM ou MADAM), le 3(diméthyl amino)propyl méthacrylate, le 2(tertiobutylamino)éthyl méthacrylate, le 2(dipentylamino)éthyl méthacrylate, le 2(diéthylamino)éthyl méthacrylate
- les vinylpyridines
- la vinylamine
- les vinylimidazolines
- des monomères précurseurs de fonctions amines tels que le N-vinyl formamide, le N-vinyl acétamide, ... qui engendrent des fonctions amines primaires par simple hydrolyse acide ou basique.

A titre d'exemples de monomères cationiques dont peuvent dériver des unités potentiellement cationiques on peut mentionner:
- les monomères ammoniumacryloyles ou acryloyloxy comme
   - les sels de triméthylammoniumpropylméthacrylate, en particulier le chlorure
   - le chlorure ou le bromure de triméthylammoniuméthylacrylamide ou méthacrylamide,
   - le méthylsulfate de triméthylammoniumbutylacrylamide ou méthacrylamide,
   - le méthylsulfate de triméthylammoniumpropylméthacrylamide (MAPTA MeS),
   - le chlorure de (3-méthacrylamidopropyl)triméthylammonium (MAPTAC),
   - le chlorure ou méthylsulfate de (3-acrylamidopropyl)triméthylammonium (APTAC ou APTA MeS),
   - le chlorure ou le méthylsulfate de méthacryloyloxyéthyl triméthylammonium,
   - les sels d'acryloyloxyéthyl triméthylammonium (ADAMQUAT) comme le chlorure d'acryloyloxyéthyl triméthylammonium ; ou le méthylsulfate d'acryloyloxyéthyl triméthylammonium (ADAMQUAT Cl ou ADAMQUAT MeS),
- le méthyle sulfate de méthyldiethylammonium éthyle acrylate (ADAEQUAT MeS),
- le chlorure ou méthyle sulfate de benzyldimethylammonium éthyle acrylate (ADAMQUAT BZ 80),
- le bromure, chlorure ou méthylsulfate de 1-éthyl 2-vinylpyridinium, de 1-éthyl 4-vinylpyridinium ;
- le chlorure de diméthylaminopropylméthacrylamide,N-(3-chloro-2-hydroxypropyl) triméthylammonium (DIQUAT chlorure),
- le methylsulfate de diméthylaminopropylméthacrylamide,N-(3-methylsulfate-2-hydroxypropyl) triméthylammonium (DIQUAT methylsulfate)
- le monomère de formule 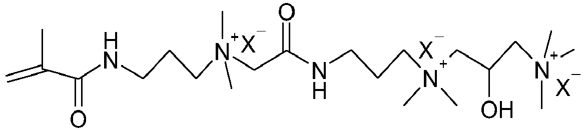
où X⁻ est un anion, de préférence chlorure ou méthylsulfate.

A titre d'exemples de monomères neutres hydrophiles dont peuvent dériver des unités neutres hydrophiles on peut mentionner:
- les hydroxyalkylesters d'acides α-β éthylèniquement insaturés comme les acrylates et méthacrylates d'hydroxyéthyle, d'hydroxypropyle, le glycérol monométhacrylate...
- les amides α-β éthylèniquement insaturés comme l'acrylamide, le méthacrylamide, le N,N-diméthyl méthacrylamide, le N-méthylolacrylamide ...
- les monomères α-β éthylèniquement insaturés portant un segment polyoxyalkyléné hydrosoluble du type polyoxyde d'éthylène, comme les polyoxydes d'éthylène α-méthacrylates (BISOMER S20W, S10W, ... de LAPORTE) ou α,ω-diméthacrylates, le SIPOMER BEM de RHODIA (méthacrylate de polyoxyéthylène ω-béhényle), le SIPOMER SEM-25 de RHODIA (méthacrylate de polyoxyéthylène ω-tristyrylphényle) ...
- l'alcool vinylique,
- les monomères α-β éthylèniquement insaturés précurseurs d'unités ou de segments hydrophiles tels que l'acétate de vinyle qui, une fois polymérisés, peuvent être hydrolysés pour engendrer des unités alcool vinylique ou des segments alcool polyvinylique
- les vinyl-lactames, notamment la vinyl-pyrrolidone et le vinyl-caprolactame
- les monomères α-β éthylèniquement insaturés de type uréido et en particulier le méthacrylamido de 2-imidazolidinone éthyle (Sipomer WAM II de RHODIA)
- le nonethyleneglycolmethyletheracrylate ou le nonethyleneglycolmethylethermethacrylate

A titre d'exemples de monomères neutres hydrophobes dont peuvent dériver des unités neutres hydrophobes, on peut mentionner:
- les monomères vinylaromatiques tels que styrène, alpha-méthylstyrène, vinyltoluène...
- les halogénures de vinyle ou de vinylidène, comme le chlorure de vinyle, chlorure de vinylidène
- les C₁-C₁₂ alkylesters d'acides α-β monoéthylèniquement insaturés tels que les acrylates et méthacrylates de méthyle, éthyle, butyle, acrylate de 2-éthylhexyle ...
- les esters de vinyle ou d'allyle d'acides carboxyliques saturés tels que les acétates, propionates, versatates, stéarates ... de vinyle ou d'allyle
- les nitriles α-β monoéthylèniquement insaturés contenant de 3 à 12 atomes de carbone, comme l'acrylonitrile, le methacrylonitrile ...
- les α-oléfines comme l'éthylène ...
- les diènes conjugués, comme le butadiène, l'isoprène, le chloroprène,
- les monomères susceptibles de générer des chaînes polydiméthylsiloxane (PDMS). Ainsi la partie A peut être un silicone, par exemple une chaîne polydiméthylsiloxane ou un copolymère comprenant des unités diméthylsiloxy,
- le diethyleneglycolethyletheracrylate ou le diethyleneglycolethylethermethacrylate.

A titre d'exemples de monomères anioniques ou potentiellement anioniques, dont peuvent dériver des unités anioniques ou potentiellement anioniques, on peut mentionner :
- des monomères possédant au moins une fonction carboxylique, comme les acides carboxyliques α-β éthylèniquement insaturés ou les anhydrides correspondants, tels que les acides ou anhydrides acrylique, méthacrylique, maleique, l'acide fumarique, l'acide itaconique, le N-méthacroyl alanine, le N-acryloylglycine et leurs sels hydrosolubles
- des monomères précurseurs de fonctions carboxylates, comme l'acrylate de tertiobutyle, qui engendrent, après polymérisation, des fonctions carboxyliques par hydrolyse.
- des monomères possédant au moins une fonction sulfate ou sulfonate, comme le 2-sulfooxyethyl méthacrylate, l'acide vinylbenzène sulfonique, l'acide allyl sulfonique, le 2-acrylamido-2méthylpropane sulfonique, l'acrylate ou le méthacrylate de sulfoethyle, l'acrylate ou le méthacrylate de sulfopropyle et leurs sels hydrosolubles
- des monomères possédant au moins une fonction phosphonate ou phosphate, comme l'acide vinylphosphonique,... les esters de phosphates éthylèniquement insaturés tels que les phosphates dérivés du méthacrylate d'hydroxyéthyle (Empicryl 6835 de RHODIA) et ceux dérivés des méthacrylates de polyoxyalkylènes et leurs sels hydrosolubles.

A titre d'exemples de monomères zwitterioniques dont peuvent dériver des unités zwitterioniques A, on peut mentionner:
- les monomères portant un groupe carboxybétaïne,
- les monomères portant un groupe sulfobétaïne, par exemple le sulfopropyl diméthyl ammonium éthyl méthacrylate (SPE), le sulfoéthyl diméthyl ammonium éthyl méthacrylate, le sulfobutyl diméthyl ammonium éthyl méthacrylate, le sulfohydroxypropyl diméthyl ammonium éthyl méthacrylate (SHPE), le sulfopropyl diméthylammonium propyl acrylamide, le sulfopropyl diméthylammonium propyl méthacrylamide (SPP), le sulfohydroxypropyl diméthyl ammonium propyl méthacrylamido (SHPP), le sulfopropyl diéthyl ammonium éthyl méthacrylate, ou le sulfohydroxypropyl diéthyl ammonium éthyl méthacrylate,
- les monomères portant un groupe phosphobétaïnes, comme le phosphatoéthyl triméthylammonium éthyl méthacrylate.

Des monomères différents du monomère M particulièrement intéressants sont les monomères suivants:
- l'acrylamide, le méthacrylamide,
- l'acide acrylique, l'acide méthacrylique,
- les vinyl-lactames, notamment la vinyl-pyrrolidone et le vinyl-lactame,
- les esters de l'acide acrylique ou méthacrylique
- les amides de l'acrylamide ou du méthacrylamide
- les esters de l'alcool vinylique.

### Composés comprenant la chaîne macromoléculaire

Le composé selon l'invention comprend une chaîne macromoléculaire à architecture contrôlée. Il peut notamment s'agir d'un composé hybride comprenant une partie inorganique, par exemple une particule inorganique telle qu'une particule de silice, à laquelle sont attachées des chaînes macromoléculaires, généralement obtenues par croissance sur la partie inorganique. Selon un mode de réalisation préféré le composé est un polymère, de préférence un copolymère à architecture contrôlée, constitué de chaînes macromoléculaires à architecture contrôlée, ne comprenant pas de partie inorganique.

Les chaînes macromoléculaires à architecture contrôlée peuvent typiquement être obtenues à l'aide d'une ou plusieurs étapes de polymérisation radicalaire contrôlée, impliquant des groupes de transfert de formule -S-SC-.

Les chaînes macromoléculaires à architecture contrôlée peuvent notamment:
- comprendre au moins une partie A macromoléculaire et une partie B macromoléculaire, où:
   - la partie A est de composition différente de la partie B, et
   - la partie B comprend les unités dérivant des monomères M, et/ou
- comprendre un centre de branchement non polymérique, et des chaînes macromoléculaires comprenant les unités dérivant du monomère M, ces chaînes étant liées au centre de branchement. Il peut notamment s'agir d'un polymère étoile obtenu par croissance de chaînes macromoléculaires sur un agent non polymérique, comprenant au moins 3 groupes de transfert reliés par un groupe organique non polymérique qui constituera le centre de branchement après polymérisation, par exemple un agent de type R-(S-CS-Z¹)ₚ où p est supérieur ou égal à trois et R est le groupe organique non polymérique qui constituera le centre de branchement. Les chaînes macromoléculaires peuvent être homopolymériques ou copolymériques, le cas échéant copolymériques à blocs comme décrit ci-dessous.

Le composé, de préférence un copolymère à architecture contrôlée, peut notamment présenter l'une des structures suivantes:
- un copolymère à blocs comprenant au moins deux blocs, la partie A correspondant à un bloc (bloc A), la partie B correspondant à un autre bloc (bloc B). On peut définir le bloc B comme étant le bloc comprenant le monomère M.
- un copolymère à gradient de concentration, la partie A correspondant à une partie moins riche en monomère M que la partie B,
- un copolymère peigne, ayant un squelette et des chaînes latérales, avec la partie A correspondant au squelette et la partie B correspondant aux chaînes latérales, ou avec la partie B correspondant au squelette et la partie A correspondant aux chaînes latérales. On peut définir la partie B comme étant la partie comprenant le monomère M.
- un copolymère étoile ou microgel étoile comprenant un coeur polymérique et des chaînes macromoléculaires périphériques, une partie au moins de la partie A ou B correspondant au coeur l'autre partie correspondant aux chaînes périphériques. On peut définir la partie B comme étant la partie comprenant le monomère M.

Selon un mode de réalisation particulier la partie A dérive de monomères éthylèniquement insaturés.

Ces structures ont notamment pour point commun de pouvoir être obtenues à l'aide du procédé selon l'invention. L'homme du métier peut déterminer le type de procédé qui peut être utilisé et les séquences d'étapes utiles. Une des étapes peut être l'étape P de polymérisation. On reporte également à la section "procédés" ci-dessous.

Selon un mode de réalisation particulier le composé est un copolymère à blocs, de préférence linéaire à blocs, comprenant au moins un bloc A et au moins un bloc B, de préférence un copolymère dibloc (bloc A)-(bloc B) ou tribloc (bloc A)-(bloc B)-(bloc A), ou (bloc B)-(bloc A)-(bloc B), où:
- le bloc B comprend des unités dérivant du monomère M et éventuellement d'autres monomères,
- le bloc A comprend des unités dérivant d'autres monomères que le monomère M, et éventuellement des unités dérivant du monomère M,
- la composition du bloc A est différente de la composition du bloc B, la quantité en nombre du monomère M dans le bloc A étant de préférence inférieure à celle du bloc B, par exemple nulle.

On mentionne que les copolymères tribloc obtenus par des procédés mettant en oeuvre trois séquences successives de polymérisation sont souvent décrits comme des copolymères à blocs (bloc A)-(bloc B)-(bloc C). Dans le cas où la composition et la masse moléculaire du troisième bloc C sont sensiblement identiques à la composition et la masse moléculaire du premier bloc A (les quantités et proportions de (co)monomères étant sensiblement identiques), les copolymères tribloc peuvent être décrits comme des copolymères tribloc A-B-A' ou par extension ou simplification comme des copolymères tribloc A-B-A.

Les chaînes macromoléculaires peuvent par exemple présenter une masse molaire moyenne comprise entre 1000 g/mol et 2000000 g/mol, souvent une masse molaire moyenne comprise entre 2000 g/mol et 100000 g/mol. Il peut s'agir d'une masse molaire moyenne théorique, calculée à partir des quantités de monomères engagés et des éventuels agents de transfert engagés, de manière connue par l'homme du métier. Il peut s'agir d'une masse molaire moyenne en nombre, mesurée par chromatographie d'exclusion stérique (CES).

Les parties A et/ou B, où la partie B au moins comprend des unités dérivant du monomère M, peuvent présenter une masse molaire moyenne comprise entre 500 g/mol et 1000000 g/mol, souvent une masse molaire moyenne comprise entre 1000 g/mol et 100000 g/mol. Il peut s'agir d'une masse molaire moyenne théorique, calculée à partir des quantités de monomères engagés et des éventuels agents de transfert engagés, pour la préparation de la partie considérée. Il peut s'agir d'une masse molaire moyenne en nombre, mesurée par chromatographie d'exclusion stérique (CES). La masse moléculaire moyenne mesurée d'une partie obtenue par polymérisation subséquente à une polymérisation précédente, est définie comme la masse molaire moyenne mesurée après la polymérisation subséquente à laquelle est retranchée la masse molaire moyenne mesurée après la polymérisation précédente.

Le rapport en poids entre la partie A et la partie B, où la partie B au moins comprend des unités dérivant du monomère M, peut être par exemple compris entre 1/100 et 100/1. Il peut s'agir d'un rapport en poids entre les monomères utilisés pour générer la partie A et la partie B. Il peut s'agir d'un rapport en poids entre les masses molaires moyennes, théoriques ou mesurées, de la partie A et de la partie B.

A titre d'exemple le composé peut être un copolymère linéaire à blocs de type dibloc (bloc A)-(bloc B), tribloc (bloc A)-(bloc B)-(bloc A) ou tribloc (bloc B)-(bloc A)-(bloc B), où le bloc B comprend des unités dérivant du monomère M, présentant une masse molaire moyenne théorique ou mesurée comprise entre 1000 g/mol et 2000000 g/mol, souvent une masse molaire moyenne comprise entre 2000 g/mol et 100000 g/mol. Le(s) bloc(s) A peut(peuvent) notamment être un(des) bloc(s) de masse molaire moyenne théorique ou mesurée comprise entre 500 g/mol et 1000000 g/mol, souvent une masse molaire moyenne comprise entre 1000 g/mol et 100000 g/mol. Le(s) bloc(s) B peut(peuvent) notamment être un(des) bloc(s) de masse molaire moyenne théorique ou mesurée comprise entre 500 g/mol et 1000000 g/mol, souvent une masse molaire moyenne comprise entre 1000 g/mol et 100000 g/mol. Le rapport en poids entre le(s) bloc(s) A et le(s) bloc(s) B peut notamment être compris entre 1/100 et 100/1.

### Etape P de polymérisation - Procédés

Le procédé selon l'invention met en oeuvre l'étape P de polymérisation décrite ci-dessus. Selon le composé à préparer, le procédé peut comprendre d'autres étapes, préalables ou subséquentes.

Lors de l'étape P de polymérisation le monomère M représente de préférence de 1 à 100% en nombre des monomères mis en oeuvre lors de l'étape de polymérisation P, de préférence de 10 à 100%.

En outre le procédé peut comprendre:
- avant ou après l'étape P de polymérisation, une autre étape de polymérisation radicalaire où on met en présence:
   - des monomères éthylèniquement insaturés, dans une composition différente de celle de l'étape P de polymérisation,
   - au moins un composé comprenant un groupe de transfert comprenant un groupe de formule -S-CS-, et
   - d'un composé portant ou générant des radicaux libres, et/ou
- après la ou les étapes de polymérisation, une étape de modification chimique des chaînes macromoléculaires et/ou de désactivation de groupes de transfert portés par des chaînes macromoléculaires, de destruction ou purification de sous-produits de la modification chimique et/ou désactivation.

On mentionne que l'autre étape de polymérisation peut constituer une étape P si elle met en oeuvre le monomère M. Dans ce cas, on peut par exemple la désigner comme une étape P' de polymérisation.

Si des polymérisations successives sont mises en oeuvre, on préfère toutefois que l'étape P de polymérisation soit subséquente à une étape ne mettant pas un oeuvre de monomère M, ou mettant en oeuvre moins de 50% en nombre, de préférence moins de 10% en nombre.

Des étapes de modification chimique des chaînes macromoléculaires visent à ajouter aux chaînes des groupes fonctionnels, à supprimer des groupes des chaînes macromoléculaires ou à substituer des groupes de chaînes macromoléculaires. Ces groupes peuvent notamment être portés par des unités dérivant de monomères ou portés en des bouts de chaîne macromoléculaire. De tels processus sont connus de l'homme du métier. On cite par exemple des étapes d'hydrolyse complète ou partielle, ou des étapes de réticulation complète ou partielle.

On peut opérer la désactivation de groupes de transfert portés par les chaînes macromoléculaires, et/ou purification et/ou destruction de sous-produits de modification chimique et/ou de désactivation. Il peut s'agir d'une réaction de purification ou de destruction de certaines espèces, par exemple par des procédés de type hydrolyse, oxydation, réduction, pyrolyse, ozonolyse ou substitution. Une étape d'oxydation avec de l'eau oxygénée est particulièrement appropriée pour traiter des espèces soufrées. On mentionne que certaines de ces réactions ou opérations peuvent avoir lieu en tout ou partie lors d'une étape de modification chimique.

L'étape P de polymérisation met en oeuvre un composé comprenant un groupe de transfert de formule -S-CS-. Selon un mode de réalisation, il s'agit d'un composé inorganique, par exemple des particules inorganiques, sur lequel sont présents des groupes de transfert de formule S-CS-, ces groupes ayant été greffés par exemple. Selon un mode de réalisation, il s'agit d'un composé polymérique sur lequel ont été greffés des groupes de transfert de formule S-CS-. Ce mode de réalisation est notamment adapté à la préparation de copolymères peignes dont les chaînes latérales comprenant des unités dérivant du monomère M, ou de copolymères à blocs comprenant un bloc siliconé. Selon un mode de réalisation il s'agit d'un agent de transfert non polymérique comprenant un groupe de transfert de formule -S-CS-. Selon un mode de réalisation le composé comprenant un groupe de transfert de formule -S-CS- est un composé macromoléculaire obtenu lors d'une étape de polymérisation précédente, pouvant avoir mis en oeuvre un composé comprenant un groupe de transfert comprenant un groupe de formule -S-CS-. Typiquement, la première étape de polymérisation met en oeuvre un composé inorganique sur lequel sont présents les groupes de transfert, ou un agent de transfert non polymérique comprenant un groupe de transfert de formule -S-CS-.

Des groupes de transfert de formule -S-CS- et des composés comprenant ces groupes, notamment des agents de transfert sont connus de l'homme du métier et sont décrits dans la littérature. On peut notamment les sélectionner selon leur réactivité vis-à-vis de certains monomères, et/ou selon leur solubilité dans le milieu réactionnel.

Le groupe de transfert peut notamment comprendre un groupe de formule -S-CS-Z- où Z est un atome d'oxygène, un atome de carbone, un atome de souffre, un atome de phosphore ou un atome de silicium, ces atomes étant le cas échéant substitués de manière à avoir une valence appropriée.

Des agents ou groupes ou procédés utiles sont notamment décrits dans les documents suivants:
- les procédés et agents des demandes WO 98/58974, WO 00/75207 et WO 01/42312 qui mettent en oeuvre une polymérisation radicalaire contrôlée par des agents de contrôle de type xanthates (groupe -S-CS-O-),
- le procédé et les agents de polymérisation radicalaire contrôlée par des agents de contrôle de type dithioesters (groupe -S-CS-Carbone) ou trithiocarbonates (groupe - S-CS-S-) de la demande WO 98/01478,
- le procédé et les agents de polymérisation radicalaire contrôlée par des agents de contrôle de type dithiocarbamates (groupe -S-CS-Azote) de la demande WO 99/31144,
- le procédé et les agents de polymérisation radicalaire contrôlée par des agents de contrôle de type dithiocarbazates (groupe -S-CS-Azote)de la demande WO 02/26836,
- le procédé et les agents de polymérisation radicalaire contrôlée par des agents de contrôle de type dithiophosphoroesters (groupe -S-CS-O-) de la demande WO 02/10223,
- les agents de type xanthates, dithiocarbonates et/ou trithiocarboinates décrits dans les documents WO02070571; WO2001060792; WO2004037780; WO2004083169; WO2003066685; WO2005068419; WO2003062280; WO2003055919; WO2006023790, et les procédés les utilisant.

A titre d'agents de transferts particulièrement utiles, on cite:
- le O-ethyl-S-(1-methoxycarbonyl ethyl) xanthate de formule

   (CH₃CH(CO₂CH₃))S(C=S)OEt
- le dibenzyltrithiocarbonate de formule ϕ-CH₂-S-CS-S-CH₂-ϕ
- le phénylbenzyldithiocarbonate de formule ϕ-S-CS-CH₂-ϕ
- le N,N-diethyl S-benzyldithiocarbamate de formule (CH₃-CH₂)₂N-CS-S-CH₂-ϕ.
Dans le procédé selon l'invention ces agents peuvent être utilisés lors d'au moins une étape de polymérisation.

L'étape P de polymérisation met en oeuvre un composé portant ou générant des radicaux libres. Selon un mode de réalisation, il s'agit d'un composé amorceur non polymérique. De tels composés sont connus de l'homme du métier. Selon un autre mode de réalisation le composé portant ou générant des radicaux libres est présent dans un produit de polymérisation d'une étape précédente. Dans ce cas, l'emploi d'un amorceur est optionnel. De manière générale quand plusieurs étapes de polymérisation successives sont mises en oeuvre, on préfère ajouter une quantité d'amorceur à chaque étape.

A titre d'exemples d'amorceurs pouvant être utilisés, on cite:
Il peut s'agir par exemple d'un des initiateurs suivants :
- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl]propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis(N,N'-diméthylèneisobutyramide), le 2,2'-azobis(2-méthyl-N-[1,1-bis (hydroxyméthyl)-2-hydroxyéthyl]propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :
- les mélanges de peroxyde d'hydrogène, d'alkyle, peresters, percarbonates et similaires et de n'importe lequel des sels de fer, des sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Pour un bon fonctionnement, notamment en terme de rapidité, de l'étape P de polymérisation, il est avantageux d'opérer à des concentrations en monomères dans le milieu de polymérisation relativement élevées, de préférence d'au moins 40%, ou même d'au moins 50% en poids. On préfère opérer à température modérée, par exemple comprise entre 30 et 70°C, typiquement de l'ordre de 50°C.

L'étape P de polymérisation, et/ou les autres étapes de polymérisations, peut être mise en oeuvre notamment par polymérisation en solution (par exemple en solution aqueuse, alcoolique ou hydroxyalcoolique), par polymérisation en masse, ou en émulsion. On peut notamment opérer l'étape P de polymérisation en émulsion inverse, notamment quand le monomère M est le DADMAC.

Par exemple pour la préparation de copolymères à blocs, on peut opérer une première étape de polymérisation en présence des groupes de transfert pour générer un premier bloc, puis une deuxième étape de polymérisation (les groupes de transfert étant toujours présents) avec une composition de monomères différente de celle de l'étape précédente, pour générer un deuxième bloc, et éventuellement d'autres étapes de polymérisation, avec des compositions de monomères différentes de celles de l'étape d'avant, pour générer d'autres blocs. La première étape peut être une étape P mettant en oeuvre le monomère M, la deuxième étape peut être une étape P mettant en oeuvre le monomère M, les autres étapes peuvent être des étapes P mettant en oeuvre le monomère M.

Ainsi, selon un mode de réalisation:
- le composé macromoléculaire est un copolymère à blocs comprenant au moins un bloc A et un bloc B,
- le bloc B comprend des unités dérivant du monomère M,
- le procédé comprend au moins les étapes suivantes:
   a) préparation du bloc A: étape de polymérisation radicalaire où on met en présence:
      - des monomères éthylèniquement insaturés,
      - au moins un agent de transfert comprenant un groupe de transfert comprenant un groupe de formule -S-CS-
      - au moins un composé générant des radicaux libres,
   b) croissance du bloc B: l'étape de polymérisation P, où on met en présence:
      - le produit obtenu à l'étape a), comprenant à titre de bloc A une chaîne macromoléculaire comprenant le groupe de transfert, et éventuellement un composé portant ou générant des radicaux libres,
      - au moins le monomère M,
      - éventuellement d'autres monomères, et
      - un composé portant ou générant des radicaux libres, si le produit obtenu à l'étape a) n'en comprend pas,
- la composition du ou des monomères mise en oeuvre lors de l'étape a) étant différente de la composition du ou des monomères mise en oeuvre lors de l'étape b). De préférence le ou les monomères mis en oeuvre lors de l'étape A ne comprennent pas de monomère M.

Pour l'obtention de copolymères dibloc (bloc A)-(bloc B), on n'opère pas d'autres étapes de polymérisation que les étapes a) et b) ci-dessus.

On peut notamment préparer des copolymères tribloc A-B-A en deux séquences de polymérisation, à l'aide d'agents comprenant deux groupes de transfert ou d'agents comprenant un groupe de transfert permettant un transfert à chaque extrémité du groupe, par exemple un trithiocarbonate comprenant un groupe de formule -S-CS-S-. Dans de tels procédés, les blocs A sont parfaitement identiques, et le bloc B comprend généralement un groupe central différent des unités de répétition du bloc B. La mention de la présence d'un groupe central au sein du bloc B, noté par exemple -X-, -X-Z'-X- ou R' plus bas, est souvent omise par soucis de simplification.

Ainsi on peut préparer des copolymères tribloc A-B-A par le procédé suivant:
- étape a'): préparation d'un polymère de formule R-A-X-A-R par polymérisation en présence d'au moins un agent de contrôle de formule R-X-R où R, identique ou différent est un groupe organique, et X est un groupe de transfert, l'agent étant un trithiocarbonate comprenant un groupe -X- de formule -S-CS-S- et de préférence deux groupes R identiques tels que les groupes benzyles (l'agent étant donc par exemple le dibenzyltrithiocarbonate),
- étape b') obtention du copolymère tribloc R-A-B-X-B-A-R (ou plus simplement A-B-A), par croissance du bloc B sur les blocs A par polymérisation radicalaire contrôlée.

On peut également préparer des copolymères tribloc A-B-A par le procédé suivant:
- étape a"): préparation d'un polymère de formule R-A-X-Z'-X-A-R par polymérisation en présence d'au moins un agent de contrôle de formule R-X-Z'-X-R où R, identique ou différent, est un groupe organique, Z' est un groupe organique divalent, et X est un groupe de transfert comprenant un groupe -S-CS-, ledit agent étant par exemple
   - un agent comprenant deux groupes xanthate, où -X- est un groupe de formule - S-CS- formant avec -Z'- un groupe de formule -S-CS-O- (xanthate), Z' étant par exemple un groupe de formule -O-CH₂-CH₂-O-, et R est par exemple un groupe benzyle ou un groupe de formule H₃C-OOC-CH(CH₃)-, ou
   - un agent comprenant deux groupes dithioesters, où -X- est un groupe de formule -S-CS- formant avec -Z'- un groupe de formule -S-CS-C- (dithioester), Z' étant par exemple un groupe phényle ou benzyle, ou un groupe de formule -CH₂-C₆H₅-CH₂-, et R est par exemple un groupe benzyle,
- étape b") obtention du copolymère tribloc R-A-B-X-Z'-X-B-A-R (ou plus simplement A-B-A), par croissance du bloc B sur les blocs A par polymérisation radicalaire contrôlée.

On peut également préparer des copolymères tribloc A-B-A par le procédé suivant:
- étape a'"): préparation d'un polymère de formule Z-X-B-R'-B-X-Z mettant en oeuvre un agent de contrôle de formule Z-X-R'-X-Z où Z, identique ou différent, est un groupe organique, R' est un groupe organique divalent, et X est un groupe de transfert, comprenant un groupe -S-CS-, ledit agent étant par exemple:
   - un agent comprenant deux groupes xanthates, où -X- est un groupe de formule -S-CS- formant avec Z- un groupe de formule -O-CS-S- (xanthate), Z- étant par exemple un groupe éthoxy, et -R'- est par exemple un groupe phényle ou benzyle, ou un groupe de formule -CH₂-C₆H₅-CH₂-,
   - un agent comprenant deux groupes dithioesters, où -X- est un groupe de formule -S-CS- formant avec Z- un groupe de formule C-CS-S- (dithioester), Z-étant par exemple un groupe phényle ou benzyle, et -R'- est par exemple un groupe phényle ou benzyle, ou un groupe de formule -CH₂-C₆H₅-CH₂-,
- étape b"') obtention du copolymère tribloc Z-X-A-B-R'-B-A-X-Z (ou plus simplement A-B-A), par croissance du bloc A sur les blocs B par polymérisation radicalaire contrôlée.

Les copolymères à gradient de concentration, peuvent être obtenus par une étape P de polymérisation au cours de laquelle on diminue progressivement la proportion de monomère M par rapport aux autres monomères.

Les copolymères peignes comprenant une partie B correspondant aux chaînes latérales peuvent être obtenus à l'aide d'une étape P de polymérisation du monomère M ou d'un mélange de monomères comprenant le monomère M où on fait croître les chaînes macromoléculaires sur des groupes de transferts présents (par exemple greffés) sur un squelette A préparé préalablement. Le squelette A peut être un polymère dérivant de monomère éthylèniquement insaturés, ou un autre squelette, par exemple un polysaccharide ou un silicone.

Les copolymères peignes comprenant une partie B correspondant au squelette peuvent être obtenus à l'aide d'une étape P de polymérisation du monomère M ou d'un mélange de monomères comprenant le monomère M, puis greffage ou croissance des chaînes macromoléculaires correspondant à la partie A, sur des unités dérivant de préférence de monomères différents des monomères M.

Les copolymères étoiles ou microgels étoiles comprenant une partie A et une partie B peuvent notamment être obtenus par des procédés de type "bras d'abord" ("arm first") ou "coeur d'abord" ("core first"), notamment décrits pour d'autres monomères dans les documents WO 00/02939 ("bras d'abord") et WO 2004/014535 ("coeur d'abord").

Le procédé "bras d'abord" implique une étape de polymérisation linéaire en présence de monomères éthylèniquement insaturés et d'un composé comprenant un groupe de transfert de formule -S-CS-, puis une étape de formation d'un coeur par polymérisation en présence du produit de l'étape de polymérisation précédente et de monomères multi-éthylèniquement insaturés. L'étape P de polymérisation peut être l'étape de polymérisation linéaire et/ou l'étape de formation du coeur, le monomère M étant utilisé dans au moins une de ces étapes.

Le procédé "coeur d'abord" implique une étape de formation d'un coeur par polymérisation en présence agent de transfert comprenant un groupe de transfert de formule -S-CS- et de multi-monomères éthylèniquement insaturés puis une étape de polymérisation linéaire en présence de monomères éthylèniquement insaturés et du produit de l'étape précédente de formation du coeur. L'étape P de polymérisation peut être l'étape de polymérisation linéaire et/ou l'étape de formation du coeur, le monomère M étant utilisé dans au moins une de ces étapes.

### Utilisations

Les composés comprenant des chaînes macromoléculaires selon l'invention, et/ou les composés obtenus ou susceptibles d'être obtenus à l'aide du procédé selon l'invention peuvent être utilisés dans de nombreux secteurs de l'industrie.

Ils peuvent notamment être utilisés:
- dans des procédés de traitement de l'eau ou des déchets
- dans des compositions cosmétiques,
- dans des compositions de soins ménagers (lessive, nettoyage des surfaces dures, vaisselle à la main ou en machine),
- dans des compositions industrielles de traitement des textiles, ou
- dans des compostions de revêtements, par exemple des peintures, ou de matières plastiques.

Dans ces domaines, ils peuvent être utilisés à titre:
- d'agent floculant, par exemple dans les procédés de traitement de l'eau ou des déchets,
- d'agent de traitement et/ou de modification de surface, par exemple la surface des cheveux ou de la peau (compositions cosmétiques) pour les conditionner, ou des surfaces domestiques (compositions de soins ménager), que ce soit la lessive (adoucissement, facilitation du repassage), pour la vaisselle (diminution des traces) ou des surfaces dures (diminution des traces)
- d'agent de rhéologie, par exemple dans des compositions de soins ménagers ou dans des compositions cosmétiques,
- d'agent antistatique ou d'agent de conduction de l'électricité, par exemple dans des compositions industrielles de traitement des textiles ou dans des compostions de revêtements ou de matières plastiques, et/ou
- d'agent antibactérien.

D'autres détails ou avantages de l'invention pourront apparaître au vu de l'exemple qui suit sans caractère limitatif.

### EXEMPLES

### Exemple 1: Synthèse d'un copolymère dibloc poly(acrylamide)-bloc-poly(chlorure de diallyldiméthylammonium)

### Etape 1: Synthèse du bloc poly(acrylamide)

Dans un réacteur en verre de 100 mL muni d'un agitateur magnétique et d'une colonne réfrigérante, 0,52 g de O-ethyl-S-(1-methoxycarbonyl ethyl) xanthate de formule (CH₃CH(CO₂CH₃))S(C=S)OEt, 1,76 g d'éthanol et 1,76 g d'eau sont introduits à 30°C. La température de la solution est augmentée jusqu'à 70°C. Dès que cette température a été atteinte, 0,10 g d'acide 4,4'-azobis(cyanovalérique) sont introduits. Dès l'introduction de cet amorceur, 20 g d'une solution aqueuse d'acrylamide à 50% en poids est introduite pendant deux heures. Au bout d'une heure d'introduction, 0,10 g d'acide 4,4'-azobis(cyanovalérique) sont à nouveau introduits. La réaction est prolongée pendant quatre heures après la fin de l'introduction.

Un échantillon de polymère est prélevé. L'analyse du produit par chromatographie liquide haute performance (CLHP) permet de conclure que tout l'acrylamide a réagi pendant la polymérisation. Une analyse en chromatographie d'exclusion stérique (CES) avec un étalonnage relatif de poly(oxyde d'éthylène) fournit les valeurs de masse molaire moyenne en nombre (Mₙ) et d'indice de polymolécularité (M_{w}/Mₙ) suivants : Mₙ=1400 g/mole, M_{w}/Mₙ=1,40.

### Etape 2. Synthèse du copolymère dibloc

En fin de synthèse du premier bloc, la température est diminuée jusqu'à 50°C. Une fois cette température stabilisée, une solution de 15,38 g de chlorure de diallyldiméthylammonium (DADMAC) à 65% en poids dans l'eau est introduite, ainsi que 146 mg d'amorceur V50 (2,2'-azobis(2-méthylproprionamidine)dihydrochloride). La réaction est ensuite maintenue à cette température pendant huit heures. En fin de réaction, un échantillon est prélevé. Une analyse en RMN 1H donne une conversion en DADMAC égale à 73%. Mn et Mw/Mn sont mesurés par CES dans l'eau : Mₙ=2800 ; M_{w}/Mₙ=1,27. La superposition des deux chromatogrammes des produits A1 et A2 permet de conclure à la nature dibloc du copolymère formé. En effet, le chromatogramme CES de l'étape 1 est totalement déplacé vers le domaine des plus hautes masses moléculaires à la fin de l'étape 2.

### Exemple 2 - Synthèse d'un copolymère dibloc poly(acide acrylique)-bloc-poly(chlorure de diallyldiméthyl ammonium)

### Etape 1. Synthèse du bloc poly(acide acrylique)

Dans un réacteur en verre à double enveloppe de 2 L muni d'une agitation mécanique et d'une colonne réfrigérante, 31,87 g de *O*-ethyl-*S*-(1-methoxycarbonyl)ethyl)xanthate (CH₃CHCO₂CH₃)S(C=S)OEt, 101,3 g d'éthanol, 8,5g d'acide acrylique et 23,64 g d'eau sont introduits à température ambiante. La température de la solution est augmentée jusqu'à 70°C. Dès que cette température a été atteinte, 0,49 g d'acide 4,4'-azobis(cyanovalérique) sont introduits. Dès l'introduction de cet amorceur, une solution de 76,5 g d'acide acrylique dans 212,8 g d'eau est introduite pendant une heure. En fin d'introduction, 0,49 g d'acide 4,4'-azobis(cyanovalérique) sont à nouveau introduits. La réaction est prolongée pendant trois heures après la fin de l'introduction.

Un échantillon de polymère est prélevé. L'analyse du produit par chromatographie liquide haute performance (CLHP) permet de conclure que tout l'acide acrylique a réagi pendant la polymérisation. Une analyse en chromatographie d'exclusion stérique (CES) avec un étalonnage relatif de poly(oxyde d'éthylène) fournit les valeurs de masse molaire moyenne en nombre (Mₙ) et d'indice de polymolécularité (M_{w}/Mₙ) suivants : Mₙ=650 g/mole, M_{w}/Mₙ=1,60.

### Etape 2. Synthèse du copolymère dibloc

En fin de synthèse du premier bloc, la température est diminuée jusqu'à 65°C. Une fois cette température stabilisée, une solution de 706 g de chlorure de diallyl diméthyl ammonium (DADMAC) à 65% en poids dans l'eau, ainsi que 4g d'amorceur V50 (2,2'-azobis(2-méthylproprionamidine)dihydrochloride) sont introduits. La réaction est ensuite maintenue à cette température pendant douze heures. Au bout de 4 heures et 8 heures de réaction, 4 g d'amorceur V50 sont rajoutés à chaque fois au milieu réactionnel. En fin de réaction, un échantillon est prélevé. Une analyse en RMN 1H donne une conversion en DADMAC égale à 98,2%. Mn et Mw/Mn sont mesurés par CES dans l'eau avec une courbe d'étalonnage PDADMAC: Mₙ=2500 ; M_{w}/Mₙ=1,50. La superposition des deux chromatogrammes des produits A1 et A2 permet de conclure à la nature dibloc du copolymère formé. En effet, le chromatogramme CES de l'étape 1 est totalement déplacé vers le domaine des plus hautes masses moléculaires à la fin de la synthèse de l'étape 2.

## Revendications

1. Procédé de préparation d'un composé comprenant des chaînes macromoléculaires, comprenant une "étape P" de polymérisation radicalaire où on met en présence :
- au moins un "monomère M" choisi parmi les amines di-allyliques quaternaires, le cas échéant sous forme d'un sel,
- éventuellement d'autres monomères éthylèniquement insaturés,
- au moins un composé comprenant un groupe de transfert comprenant un groupe de formule -S-CS-, et
- d'un composé portant ou générant des radicaux libres.

2. Procédé selon la revendication 1, **caractérisé en ce que** le monomère M est choisi parmi des monomères de formules suivantes :
CH₂ = CH-CH₂-N⁺R¹R²-CH₂-CH = CH₂, X⁻ (II)
CH₂ = CH-CH₂-N⁺R¹R³CH₂-CH = CH₂ (III)
dans lesquelles,
- R¹ est un groupe hydrocarboné linéaire ou ramifié, saturé ou insaturé, le cas échéant aromatique, le cas échéant substitué, de préférence en C₁-C₃₀,
- R² est un atome d'hydrogène ou un groupe de formule R¹ identique ou différent, formant le cas échéant avec le groupe R¹ un cycle éventuellement hétérocyclique, éventuellement aromatique,
- X⁻ est un anion, de préférence un anion Cl⁻,
- R³ est un groupe hydrocarboné linéaire ou ramifié, saturé ou insaturé, le cas échéant aromatique, le cas échéant substitué, comprenant au moins un groupe portant une charge négative, de préférence en C₁-C₃₀, formant |e cas échéant avec le groupe R¹ un cycle éventuellement hétérocyclique, éventuellement aromatique.

3. Procédé selon l'une des revendications précédentes, **caractérisé en ce que** le monomère M est le chlorure de diallyldiméthylammonium (DADMAC).

4. Procédé selon l'une des revendications précédentes, **caractérisé en ce que** le monomère M représente de 1 à 100% en nombre des monomères mis en oeuvre lors de l'étape de polymérisation P.

5. Procédé selon l'une des revendications précédentes, **caractérisé en ce qu'**il comprend :
- avant ou après l'étape P de polymérisation, une autre étape de polymérisation radicalaire où on met en présence :
- des monomères éthylèniquement insaturés, dans une composition différente de celle de l'étape P de polymérisation,
- au moins un composé comprenant un groupe de transfert comprenant un groupe de formule -S-CS-, et
- d'un composé portant ou générant des radicaux libres, et/ou
- après la ou les étapes de polymérisation, une étape de modification chimique des chaînes macromoléculaires et/ou de désactivation de groupes de transfert portés par des chaînes macromoléculaires, de destruction ou purification de sous-produits de la modification chimique et/ou désactivation.

6. Procédé selon la revendication précédente, **caractérisé en ce que**:
- le composé macromoléculaire est un copolymère à blocs comprenant au moins un bloc A et un bloc B,
- le bloc B comprend des unités dérivant du monomère M,
- le procédé comprend au moins les étapes suivantes :
a) préparation du bloc A : étape de polymérisation radicalaire où on met en présence :
- des monomères éthylèniquement insaturés,
- au moins un agent de transfert comprenant un groupe de transfert comprenant un groupe de formule -S-CS-
- au moins un compose générant des radicaux libres,
b) croissance du bloc B : l'étape de polymérisation P, où on met en présence :
- le produit obtenu à l'étape a), comprenant à titre de bloc A une chaîne macromoléculaire comprenant le groupe de transfert, et éventuellement un composé portant ou générant des radicaux libres,
- au moins le monomère M,
- éventuellement d'autres monomères, et
- un composé portant ou générant des radicaux libres, si le produit obtenu à l'étape a) n'en comprend pas,
- la composition du ou des monomères mis en oeuvre lors de l'étape a) étant différente de la composition du ou des monomères mis en oeuvre lors de l'étape b).

7. Procédé selon l'une des revendications précédentes, **caractérisé en ce que** le groupe de transfert comprend un groupe de formule -S-CS-Z-, où Z est un atome d'oxygène, un atome de carbone, un atome de soufre, un atome de phosphore ou un atome de silicium, ces atomes étant le cas échéant substitués de manière à avoir une valence appropriée.

8. Procédé selon la revendication précédente, **caractérisé en ce qu'**on utilise lors d'au moins une étape de polymérisation, un agent de transfert choisi parmi :
- le O-ethyl-S-(1-methoxycarbonyl ethyl) xanthate de formule
(CH₃CH(CO₂CH₃))S(C=S)OEt
- le dibenzyltrithiocarbonate de formule ϕ-CH₂-S-CS-S-CH₂-ϕ
- le phénylbenzyldithiocarbonate de formule ϕ-S-CS-CH₂-ϕ
- le N,N-diethyl S-benzyldithiocarbamate de formule (CH₃-CH₂)₂N-CS-S-CH₂-ϕ.

9. Procédé selon l'une des revendications précédentes, **caractérisé en ce que** l'étape P de polymérisation, et/ou d'autres étapes de polymérisations, est mise en oeuvre par polymérisation en solution ou en émulsion, de préférence en émulsion inverse.

10. Composé comprenant des chaînes macromoléculaires à architecture contrôlée, **caractérisé en ce que** :
- les chaînes macromoléculaires comprennent au moins 10% en nombre, de préférence au moins 50%, de préférence au moins 90% d'unités dérivant de monomères éthylèniquement insaturés,
- les chaînes macromoléculaires comprennent des unités dérivant d'au moins un "monomère M" choisi parmi les amines di-allyliques quaternaires, le cas échéant sous forme d'un sel.

11. Composé selon la revendication 10, **caractérisé en ce qu'**il s'agit d'un copolymère à architecture contrôlée.

12. Composé selon l'une des revendications 10 ou 11, **caractérisé en ce que** les chaînes macromoléculaires à architecture contrôlée :
- comprennent au moins une partie A macromoléculaire et une partie B macromoléculaire, où :
- la partie A est de composition différente de la partie B, et
- la partie B comprend les unités dérivant des monomères M, et/ou
- comprennent un centre de branchement non polymérique, et des chaînes macromoléculaires comprenant les unités dérivant du monomère M, ces chaînes étant liées au centre de branchement.

13. Composé selon la revendication précédente, **caractérisé en ce qu'**il s'agit d'un composé de structure suivante :
- un copolymère à blocs comprenant au moins deux blocs, la partie A correspondant à un bloc, la partie B correspondant à un autre bloc,
- un copolymère à gradient de concentration, la partie A correspondant à une partie moins riche en monomère M que la partie B,
- un copolymère peigne, ayant un squelette et des chaines latérales, avec la partie A correspondant au squelette et la partie B correspondant aux chaînes latérales, ou avec la partie B correspondant au squelette et la partie A correspondant aux chaînes latérales,
- un copolymère étoile ou microgel étoile comprenant un coeur polymérique et des chaînes macromoléculaires périphériques, une partie au moins de la partie A ou B correspondant au coeur, l'autre partie correspondant aux chaînes périphériques.

14. Composé selon l'une des revendications 10 à 13, **caractérisé en ce que** le monomère M est un monomère tel que défini dans l'une des revendications 2 ou 3.

15. Composé selon l'une des revendications 10 à 14, **caractérisé en ce qu'**il s'agit d'un copolymère à blocs comprenant au moins un bloc A et au moins un bloc B, de préférence un copolymère dibloc (bloc A)-(bloc B) ou tribloc (bloc A)-(bloc B)-(bloc A), ou (bloc B)-(bloc A)-(bloc B), où :
- le bloc B comprend des unités dérivant du monomère M et éventuellement d'autres monomères,
- le bloc A comprend des unités dérivant d'autres monomères que le monomère M, et éventuellement des unités dérivant du monomère M, en quantité en nombre inférieure à celle du bloc B.

16. Composé selon l'une des revendications 10 à 15, **caractérisé en ce que** :
- il comprend des unités dérivant de monomères différents du monomère M, et
- ces unités dérivent de monomères choisis parmi :
- l'acrylamide, le méthacrylamide,
- l'acide acrylique, l'acide méthacrylique,
- les vinyl-lactames,
- les esters de l'acide acrylique ou méthacrylique
- les amides de l'acrylamide ou du méthacrylamide
- les esters de l'alcool vinylique.

17. Composé selon l'une des revendications 10 à 16, **caractérisé en ce qu'**au moins 50% en nombre, de préférence au moins 90%, des unités dérivant du monomère M sont sous forme d'un hétérocycle comprenant l'atome d'azote.

18. Composé selon l'une des revendications 10 à 17, susceptible d'être obtenu par le procédé selon l'une des revendications 1 à 9.

19. Utilisation du composé selon l'une des revendications 10 à 18 :
- dans des procédés de traitement de l'eau ou des déchets
- dans des compositions cosmétiques,
- dans des compositions de soins ménagers,
- dans des compositions industrielles de traitement des textiles, ou
- dans des compostions de revêtements ou de matières plastiques.

20. Utilisation du composé selon l'une des revendications 10 à 18, à titre
- d'agent floculant,
- d'agent de traitement et/ou de modification de surface,
- d'agent de rhéologie,
- d'agent antistatique ou d'agent de conduction de l'électricité, et/ou
- d'agent antibactérien.

## Patentansprüche

1. Verfahren zur Herstellung einer Zusammensetzung, bestehend aus makromolekularen Ketten, umfassend einen "Schritt P" zur radikalischen Polymerisation, in der man zusammenbringt:
- mindestens ein "Monomer M", ausgewählt aus den quaternären Diallylaminen, gegebenenfalls in Form eines Salzes,
- eventuell weitere ethylenisch ungesättigte Monomere,
- mindestens eine Verbindung, die eine Transfergruppe umfasst, die eine Formelgruppe -S-CS- umfasst, und
- eine Verbindung, die freie Radikale trägt oder erzeugt.

2. Verfahren nach Anspruch 1, **dadurch gekennzeichnet, dass** das Monomer M aus Monomeren folgender Formeln ausgewählt wird:
CH₂ = CH-CH₂-N⁺R¹R²-CH₂-CH = CH₂, X (II)
CH₂ = CH-CH₂-N⁺R¹R³CH₂-CH = CH₂, (III)
in welchen
- R¹ eine lineare oder verzweigte, gesättigte oder ungesättigte Kohlenwasserstoffgruppe ist, gegebenenfalls aromatisch, gegebenenfalls substituiert, vorzugsweise C₁-C₃₀,
- R² ein Wasserstoffatom oder eine identische oder verschiedene Formelgruppe R¹ ist, gegebenenfalls mit der Gruppe R¹ einen eventuell heterozyklischen, eventuell aromatischen Ring bildend,
- X ein Anion ist, vorzugsweise ein Anion Cl,
- R³ eine lineare oder verzweigte, gesättigte oder ungesättigte Kohlenwasserstoffgruppe ist, gegebenenfalls aromatisch, gegebenenfalls substituiert, umfassend mindestens eine Gruppe mit einer negativen Ladung, vorzugsweise C₁-C₃₀, gegebenenfalls mit der Gruppe R₁ einen eventuell heterozyklischen, eventuell aromatischen Ring bildend.

3. Verfahren nach einem der vorstehenden Ansprüche, **dadurch gekennzeichnet, dass** das Monomer M das Diallyldimethylammonniumchlorid (DADMAC) ist.

4. Verfahren nach einem der vorstehenden Ansprüche, **dadurch gekennzeichnet, dass** das Monomer M 1 bis 100 % Anzahl der Monomere darstellt, die bei dem Polymerisationsschritt P umgesetzt wurden.

5. Verfahren nach einem der vorstehenden Ansprüche, **dadurch gekennzeichnet, dass** es umfasst:
- vor oder nach dem Polymerisationsschritt P einen weiteren radikalischen Polymerisationsschritt, in welchem man zusammenbringt:
- ethylenisch ungesättigte Monomere, in einer Zusammensetzung, die von jener des Polymerisationsschritts P verschieden ist,
- mindestens eine Verbindung, die eine Transfergruppe umfasst, die eine Formelgruppe -S-CS- umfasst, und
- eine Verbindung, die freie Radikale trägt oder erzeugt, und/oder
- nach der oder den Polymerisationsschritten einen Schritt zur chemischen Veränderung der makromolekularen Ketten und/oder zur Inaktivierung von durch makromolekulare Ketten getragenen Transfergruppen, zur Zerstörung oder Reinigung von Nebenprodukten der chemischen Veränderung und/oder Inaktivierung.

6. Verfahren nach dem vorstehenden Anspruch, **dadurch gekennzeichnet, dass**:
- die makromolekulare Verbindung ein Blockcopolymer ist, das mindestens einen Block A und einen Block B umfasst,
- der Block B Einheiten umfasst, die sich von dem Monomer M ableiten,
- das Verfahren mindestens die folgenden Schritte umfasst:
a) Herstellung des Blocks A: Schritt einer radikalischen Polymerisation, in dem man zusammenbringt:
- ethylenisch ungesättigte Monomere,
- mindestens einen Transferagenten, der eine Transfergruppe umfasst, die eine Formelgruppe -S-CS- umfasst,
- mindestens eine Verbindung, die freie Radikale erzeugt,
b) Wachstum des Blocks B: den Polymerisationsschritt P, in welchem man zusammenbringt:
- das im Schritt a) erhaltene Produkt, das als Block A eine makromolekulare Kette umfasst, die die Transfergruppe umfasst, und eventuell eine Verbindung, die freie Radikale trägt oder erzeugt,
- mindestens das Monomer M,
- eventuell weitere Monomere, und
- eine Verbindung, die freie Radikale trägt oder erzeugt, wenn das im Schritt a) erhaltene Produkt keine umfasst,
- die Zusammensetzung des oder der während des Schritts a) umgesetzten Monomere von der Zusammensetzung des oder der während des Schritts b) umgesetzten Monomere verschieden ist.

7. Verfahren nach einem der vorstehenden Ansprüche, **dadurch gekennzeichnet, dass** die Transfergruppe eine Formelgruppe -S-CS-Z- umfasst, in der Z ein Sauerstoffatom, ein Kohlenstoffatom, ein Schwefelatom, ein Phosphoratom oder ein Siliziumatom ist, wobei diese Atome gegebenenfalls dergestalt substituiert werden, dass sie eine geeignete Wertigkeit haben.

8. Verfahren nach dem vorstehenden Anspruch, **dadurch gekennzeichnet, dass** während mindestens einem Polymerisationsschritt ein Transferagent verwendet wird, der ausgewählt wird aus:
- dem O-Ethyl-S-(1-methoxycarbonylethyl)xanthat der Formel
(CH₃CH(CO₂CH₃))S(C=S)OEt
- dem Dibenzyltrithiocarbonat der Formel ϕ-CH₂-S-CS-S-CH₂-ϕ
- dem Phenylbenzyldithiocarbonat der Formel ϕ-S-CS-CH₂-ϕ
- dem N,N-Diethyl S-benzyldithiocarbamat der Formel (CH₃-CH₂)₂N-CS-S-CH₂-ϕ.

9. Verfahren nach einem der vorstehenden Ansprüche, **dadurch gekennzeichnet, dass** der Polymerisationsschritt P, und/oder weitere Polymerisationsschritte, durch Polymerisation in Lösung oder in Emulsion umgesetzt wird, vorzugsweise in umgekehrter Emulsion.

10. Verbindung, die makromolekulare Ketten mit kontrollierter Architektur umfasst, **dadurch gekennzeichnet, dass**:
- die makromolekularen Ketten mindestens 10 % Anzahl, vorzugsweise mindestens 50 %, vorzugsweise mindestens 90 % Einheiten, die sich von ethylenisch ungesättigten Monomeren ableiten, umfassen,
- die makromolekularen Ketten Einheiten umfassen, die sich von mindestens einem "Monomer M" ableiten, das aus den quaternären Diallylaminen ausgewählt wird, gegebenenfalls in Form eines Salzes.

11. Verbindung nach Anspruch 10, **dadurch gekennzeichnet, dass** es sich um ein Copolymer mit kontrollierter Architektur handelt.

12. Verbindung nach einem der Ansprüche 10 oder 11, **dadurch gekennzeichnet, dass** die makromolekularen Ketten mit kontrollierter Architektur:
- mindestens einen makromolekularen Teil A und einen makromolekularen Teil B umfassen, wo:
- der Teil A eine von Teil B verschiedene Zusammensetzung aufweist, und
- der Teil B die Einheiten umfasst, die sich von den Monomeren M ableiten, und/oder
- ein nicht polymerisches Vernetzungszentrum umfassen, und makromolekulare Ketten, die die Einheiten, die sich aus dem Monomer M ableiten, umfassen, wobei diese Ketten mit dem Vernetzungszentrum verbunden sind.

13. Verbindung nach dem vorstehenden Anspruch, **dadurch gekennzeichnet, dass** es sich um eine Verbindung mit folgender Struktur handelt:
- ein Blockcopolymer, umfassend mindestens zwei Blöcke, wobei der Teil A einem Block entspricht und der Teil B einem anderen Block entspricht,
- ein Copolymer mit Konzentrationsgradient, wobei der Teil A einem Teil entspricht, der an Monomer M weniger reich als Teil B ist,
- ein Kamm-Copolymer, das ein Gerüst und Seitenketten hat, wobei der Teil A dem Gerüst entspricht und der Teil B den Seitenketten entspricht, oder der Teil B dem Gerüst entspricht und der Teil A den Seitenketten entspricht,
- ein Stern-Copolymer oder ein Mikrogel-Stern, umfassend einen polymeren Kern und periphere makromolekulare Ketten, und einen Teil mindestens des Teils A oder B, der dem Kern entspricht, während der andere Teil den peripheren Ketten entspricht.

14. Verbindung nach einem der Ansprüche 10 bis 13, **dadurch gekennzeichnet, dass** das Monomer M ein Monomer ist, wie es in einem der Ansprüche 2 oder 3 definiert ist.

15. Verbindung nach einem der Ansprüche 10 bis 14, **dadurch gekennzeichnet, dass** es sich um ein Blockcopolymer handelt, das mindestens einen Block A und mindestens einen Block B umfasst, vorzugsweise ein Zweiblockcopolymer (Block A)-(Block B) oder Dreiblockcopolymer (Block A)-(Block B)-(Block A) oder (Block B)-(Block A)-(Block B), in dem:
- der Block B Einheiten umfasst, die sich von dem Monomer M und eventuell von anderen Monomeren ableiten,
- der Block A Einheiten umfasst, die sich von anderen Monomeren als dem Monomer M ableiten, und eventuell Einheiten, die sich vom dem Monomer M ableiten, in einer zahlenmäßig geringeren Menge als jener des Blocks B.

16. Verbindung nach einem der Ansprüche 10 bis 15, **dadurch gekennzeichnet, dass**:
- sie Einheiten umfasst, die sich aus Monomeren ableiten, die von dem Monomer M verschieden sind, und
- diese Einheiten sich von Monomeren ableiten, die gewählt werden aus:
- dem Acrylamid, dem Methacrylamid,
- der Acrylsäure, der Methacrylsäure,
- den Vinyl-Lactamen,
- den Estern der Acryl- oder Methacrylsäure,
- den Amiden des Acryl- oder Methacrylamids,
- den Estern des Vinylalkohols.

17. Verbindung nach einem der Ansprüche 10 bis 16, **dadurch gekennzeichnet, dass** mindestens 50 % Anzahl, vorzugsweise mindestens 90 %, der Einheiten, die sich aus dem Monomer M ableiten, in Form eines Heterozyklusses vorliegen, der das Stickstoffatom enthält.

18. Verbindung nach einem der Ansprüche 10 bis 17, dazu geeignet, durch das Verfahren nach einem der Ansprüche 1 bis 9 erhalten zu werden.

19. Verwendung der Verbindung nach einem der Ansprüche 10 bis 18:
- in Aufbereitungsverfahren von Wasser oder Abfällen,
- in kosmetischen Zusammensetzungen,
- in Haushaltspflegezusammensetzungen,
- in industriellen Zusammensetzungen zur Behandlung von Textilien, oder
- in Zusammensetzungen für Beschichtungen oder Kunststoffmaterialien.

20. Verwendung der Verbindung nach einem der Ansprüche 10 bis 18, als
- Flockungsmittel,
- Mittel zur Behandlung und/oder Veränderung von Oberflächen,
- Rheologiemittel,
- antistatisches Mittel oder Mittel zur Leitung des Stroms, und/oder
- antibakterielles Mittel.

## Claims

1. A process for preparing a compound comprising macromolecular chains, comprising a "step P" of radical polymerization in which the following are placed in contact:
- at least one "monomer M" chosen from quaternary diallylamines, where appropriate in the form of a salt,
- optionally, other ethylenically unsaturated monomers,
- at least one compound comprising a transfer group comprising a group of formula -S-CS-, and
- a compound bearing or generating free radicals.

2. The process as claimed in claim 1, **characterized in that** the monomer M is chosen from monomers having the following formulae:
CH₂=CH-CH₂-N⁺R¹R²-CH₂-CH=CH₂, X⁻ (II)
CH₂=CH-CH₂-N⁺R¹R³CH₂-CH=CH₂ (III)
in which:
- R¹ is a linear or branched, saturated or unsaturated hydrocarbon-based group, possibly aromatic, possibly substituted, preferably of C₁-C₃₀,
- R² is a hydrogen atom or an identical or different group of formula R¹, forming, where appropriate, with the group R¹, an optionally heterocyclic, optionally aromatic ring,
- X⁻ is an anion, preferably a Cl⁻ anion,
- R³ is a linear or branched, saturated or unsaturated hydrocarbon-based group, which is possibly aromatic, possibly substituted, comprising at least one group bearing a negative charge, preferably of C₁-C₃₀, forming, where appropriate, with the group R¹, an optionally heterocyclic, optionally aromatic ring.

3. The process as claimed in either of the preceding claims, **characterized in that** the monomer M is diallyldimethylammonium chloride (DADMAC).

4. The process as claimed in one of the preceding claims, **characterized in that** the monomer M represents from 1% to 100% by number of the monomers used during the polymerization step P.

5. The process as claimed in one of the preceding claims, **characterized in that** it comprises:
- before or after the polymerization step P, another step of radical polymerization in which the following are placed in contact:
- ethylenically unsaturated monomers, in a composition different than that of the polymerization step P,
- at least one compound comprising a transfer group comprising a group of formula -S-CS-, and
- a compound bearing or generating free radicals, and/or
- after the polymerization step(s), a step of chemical modification of the macromolecular chains and/or of deactivation of the transfer groups borne by the macromolecular chains, of destruction or purification of by-products of the chemical modification and/or deactivation.

6. The process as claimed in the preceding claim, **characterized in that**:
- the macromolecular compound is a block copolymer comprising at least one block A and one block B,
- the block B comprises units derived from the monomer M,
- the process comprises at least the following steps:
a) preparation of block A: radical polymerization step in which the following are placed in contact:
- ethylenically unsaturated monomers,
- at least one transfer agent comprising a transfer group comprising a group of formula -S-CS-,
- at least one compound generating free radicals,
b) growth of block B: the polymerization step P, in which the following are placed in contact:
- the product obtained in step a), comprising as block A a macromolecular chain comprising the transfer group, and optionally a compound bearing or generating free radicals,
- at least the monomer M,
- optionally other monomers, and
- a compound bearing or generating free radicals, if the product obtained in step a) does not comprise any,
- the composition of the monomer(s) used during step a) being different than the composition of the monomer(s) used during step b).

7. The process as claimed in one of the preceding claims, **characterized in that** the transfer group comprises a group of formula -S-CS-Z-, in which Z is an oxygen atom, a carbon atom, a sulfur atom, a phosphorus atom or a silicon atom, these atoms being substituted, where appropriate, so as to have a suitable valency.

8. The process as claimed in the preceding claim, **characterized in that** during at least one polymerization step, a transfer agent is used chosen from:
- O-ethyl-S-(1-methoxycarbonylethyl) xanthate of formula
(CH₃CH(CO₂CH₃))S(C=S)OEt
- dibenzyl trithiocarbonate of formula ϕ-CH₂-S-CS-S-CH₂-ϕ
- phenyl benzyl dithiocarbonate of formula ϕ-S-CS-CH₂-ϕ
- N,N-diethyl S-benzyl dithiocarbamate of formula (CH₃-CH₂)₂N-CS-S-CH₂-ϕ.

9. The process as claimed in one of the preceding claims, **characterized in that** the polymerization step P, and/or other polymerization steps, is (are) performed by solution or emulsion polymerization, preferably in inverse emulsion.

10. A compound comprising macromolecular chains of controlled architecture, **characterized in that**:
- the macromolecular chains comprise at least 10% by number, preferably at least 50% and preferably at least 90% of units derived from ethylenically unsaturated monomers,
- the macromolecular chains comprise units derived from at least one "monomer M" chosen from quaternary diallylamines, where appropriate in the form of a salt.

11. The compound as claimed in claim 10, **characterized in that** it is a copolymer of controlled architecture.

12. The compound as claimed in either of claims 10 and 11, **characterized in that** the macromolecular chains of controlled architecture:
- comprise at least one macromolecular part A and one macromolecular part B, in which:
- part A is of different composition than part B, and
- part B comprises the units derived from the monomers M, and/or
- comprise a nonpolymeric branching center, and macromolecular chains comprising units derived from the monomer M, these chains being connected to the branching center.

13. The compound as claimed in the preceding claim, **characterized in that** it is a compound having the following structure:
- a block copolymer comprising at least two blocks, part A corresponding to one block (block A), part B corresponding to another block (block B),
- a concentration-gradient copolymer, part A corresponding to a part that is less rich in monomer M than part B,
- a comb copolymer, having a backbone and side chains, with part A corresponding to the backbone and part B corresponding to the side chains, or with part B corresponding to the backbone and part A corresponding to the side chains,
- a star copolymer or star microgel comprising a polymer core and peripheral macromolecular chains, at least part of the part A or B corresponding to the core, the other part corresponding to the peripheral chains.

14. The compound as claimed in one of claims 10 to 13, **characterized in that** the monomer M is a monomer as defined in either of claims 2 and 3.

15. The compound as claimed in one of claims 10 to 14, **characterized in that** it is a block copolymer comprising at least one block A and at least one block B, preferably a diblock copolymer (block A)-(block B) or a triblock copolymer (block A)-(block B)-(block A) or (block B)-(block A)-(block B), in which:
- block B comprises units derived from the monomer M and optionally other monomers,
- block A comprises units derived from monomers other than the monomer M, and optionally units derived from the monomer M, in a numerical amount less than that of block B.

16. The compound as claimed in one of claims 10 to 15, **characterized in that**:
- it comprises units derived from monomers other than the monomer M, and
- these units are derived from monomers chosen from:
- acrylamide, methacrylamide,
- acrylic acid, methacrylic acid,
- vinyllactams
- acrylic or methacrylic acid esters,
- acrylamide or methacrylamide amides,
- vinyl alcohol esters.

17. The compound as claimed in one of claims 10 to 16, **characterized in that** at least 50% by number and preferably at least 90% of the units derived from the monomer M are in the form of a heterocycle comprising a nitrogen atom.

18. The compound as claimed in one of claims 10 to 17, which may be obtained via the process as claimed in one of claims 1 to 9.

19. The use of the compound as claimed in one of claims 10 to 18:
- in water-treatment or waste-processing processes,
- in cosmetic compositions,
- in household management compositions,
- in industrial textile-treatment compositions, or
- in coating compositions or plastics.

20. The use of the compound as claimed in one of claims 10 to 18, as
- a flocculent,
- an agent for treating and/or modifying a surface,
- a rheological agent,
- an antistatic agent or electricity-conducting agent, and/or
- an antibacterial agent.
